# EUROPEAN PATENT SPECIFICATION

(11) **EP 3 416 518 B1**
(45) Date of publication and mention of the grant of the patent: **18.12.2019**
(21) Application number: 17702643.2
(22) Date of filing: 03.02.2017
(51) Int. Cl.: A44B 13/00, A41C 3/12, C09D 7/65

(54) **WIRE FOR HOOK AND EYE BRASSIERE CLOSURES**
DRAHT FÜR HAKEN- UND ÖSENVERSCHLÜSSE FÜR BÜSTENHALTER
FIL POUR FERMETURES DE SOUTIEN-GORGE À OEILLET ET CROCHET

(30) Priority: 15.02.2016 EP 16155673
(43) Date of publication of application: 26.12.2018
(73) Proprietor: NV Bekaert SA, 8550 Zwevegem (BE)
(72) Inventor: KODECK, Valérie, 9470 Denderleeuw (BE); LEDOUX, Luc, Stefaan, 8850 Ardooie (BE); VAN DE VELDE, Nadine, 8530 Harelbeke (BE); MOERMAN, Jean-Marc, 8550 Zwevegem (BE)
(74) Representative: Messely, Marc
(86) International application number: PCT/EP2017/052329
(87) International publication number: WO 2017/140514

(56) References cited:
- EP-A1- 1 559 483
- EP-A1- 2 471 393
- JP-A- 2003 250 607

## Description

### Technical Field

The invention relates to wires used for hook and eye closures of brassieres; and to hooks and eyes for brassiere closures; and to brassieres.

### Background Art

Hook and eye closures are used for a long time in brassieres. The hooks and eyes are made from a steel wire; e.g. from a polymer coated steel wire. Polyamide as polymer coating on the steel wire can be used. Hooks and eyes are sewn in by machine into the back ends of the chest bands of the brassiere. Brassieres are fashion articles. As such they are marketed in different colours. In a typical process, the brassiere - or at least the chest bands with hooks and eyes already attached to them - is piece dyed, in which the fabric panels of the brassiere and the hooks and eyes already attached to the fabric panels are dyed in the same process. The objective is that fabric panels, hooks and eyes are dyed to the same colour. Polyamide coating layers on the wires out of which the hooks and eyes are made have the benefit that they can be dyed in the same dyeing process as the fabric panels, using appropriate dye combinations in the dye bath.

JP2003250607A discloses a synthetic resin-coated steel wire. The wire is dyeable in any colour after shaping the wire into a hook or eye shape. The wire comprises a synthetic resin layer coloured in white or other colours having a high masking power; and a surface polyamide layer consisting of a nearly transparent and colourless polyamide resin or a pale white-based polyamide resin capable of being dyed in any colour.

### Disclosure of Invention

It is an objective of the invention to provide wires for manufacturing hooks and eyes for brassieres that have better ability to be dyed uniformly in the dyeing process of the brassiere and for brassieres that maintain colour uniformity after multiple laundry cycles.

According to a first aspect of the invention, a wire is provided comprising a steel core wire and a polyamide coating layer. With steel core wire is meant a steel wire that forms the core of the inventive wire. The polyamide coating layer is provided at the surface of the inventive wire. The polyamide of the polyamide coating layer is selected from the group consisting of polyamide 6, polyamide 6.6, polyamide 11 and polyamide 12. The inventive wire comprises a polyamide-imide coating layer contacting the polyamide coating layer at the inner side of the polyamide coating layer. With the polyamide-imide coating layer contacting the polyamide coating layer at the inner side of the polyamide coating layer is meant that the polyamide-imide coating layer contacting the polyamide coating layer, is provided towards the inner side of the inventive wire with respect to the polyamide coating layer.

It is a benefit of the inventive wire that hooks and eyes can be made from it for use in brassieres with improved colour uniformity of the brassieres. The brasserie or at least the chest bands with the hooks and eyes already attached to them; is dyed using textile dyes in order to colour chest bands and hooks and/or eyes in one single process to the same colour. The dyeing process is performed in hot water or solvent, during a certain period in time, during which there is fluid circulation between dye bath and the products to be dyed. It has been realized that use of the inventive wires eliminates spots of different colour and/or uncoloured spots on the hooks and eyes, resulting in brassieres with improved colour uniformity, after dyeing, but also over the lifetime of the brassiere. During the lifetime of the brassiere, it undergoes multiple laundry cycles. It is believed that the benefit of colour uniformity is obtained thanks to the avoidance by the polyamide-imide coating layer - acting as an adhesion layer - of peeling off of part of the polyamide coating layer during the dyeing process and/or during laundry operations; both processes involving humidity, heat and mechanical excitation.

It is a further benefit that the improved colour uniformity is obtained avoiding the use of chromic acid or phosphoric acid. Phosphoric acid and chromic acid are known for their use in surface treatment of galvanized steel surfaces. Such surface treatments comprise a conversion process of the surface, common conversion processes are chromating (using chromic acid) and phosphating (using phosphoric acid). Use of chromic acid and phosphoric acid is to be avoided because of environmental and safety issues related to their handling and disposal of such solutions; also as such solutions frequently comprise other chemicals that have negative impact on health or on the environment.

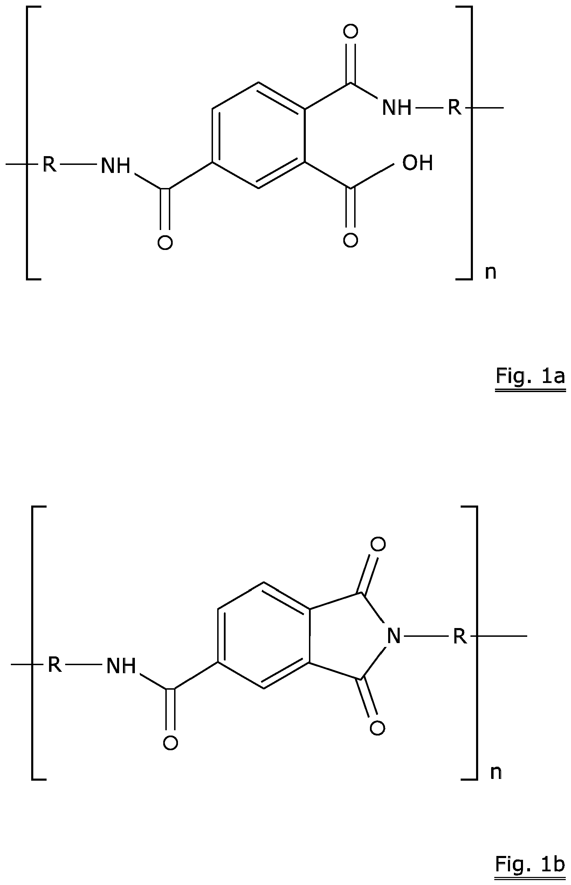

As polyamide-imide polymers are substantially insoluble in water or in water based mixtures, polyamide-imide coating layers for the invention are preferably applied as a polyamide-amic acid precursor. An amic acid is an organic compound with amide and carboxylic acid functional groups. When heated, the carboxylic acid functional groups and the amide functional groups of the polyamide-amic acid precursor undergo cyclization to the imide form. The amic acid form and the imidized form are shown in Figure 1a and Figure 1b respectively. Preferably, the polyamide-amic acid is heated to a temperature of at least 100 °C, for example to a temperature ranging between 150 and 350 °C. More preferably, the polyamide-amic acid is heated to a temperature ranging between 180 and 300 °C, for example between 180 and 275 °C.

The polyamide-imide coating layer can be applied by any technique known in the art. Preferably, the polyamide-imide coating layer is applied as a curable coating layer. The curable coating layer is then cured in a subsequent step, preferably after removing the water. The polyamide-imide coating layer is preferably applied from a dispersion of an amide-amic acid polymer. Preferred techniques to apply the polyamide-imide coating layer comprise dipping, rolling, brushing or spraying. Preferably, between 5 and 50 % of the amide-amic acid polymer of the dispersion is present in the unimidized form. The percentage of amide-amic acid polymer in the unimidized form is for example 15 %.

In a preferred method, the polyamide-imide coating layer is applied by dipping a wire substrate in an aqueous solution comprising a partially imidized polyamide-amic acid polymer dispersed in water. This coating layer is preferably cured at a temperature ranging between 100 and 300°C, more preferably 160 and 300 °C, even more preferably at a temperature ranging between 180 and 275 °C. The curing is for example heat induction or infrared curing.

Preferably, the polyamide-imide coating layer of the inventive wire has a thickness between 1 and 10 µm; and more preferably between 2 µm and 5 µm, for example 3 µm.

Preferably, the thickness of the polyamide coating layer of the inventive wire is between 100 and 500 µm; more preferably between 200 µm and 400 µm.

Preferably, the polyamide coating layer of the inventive wire does not comprise an imide or polyamide-imide.

The polyamide coating layer can be applied by any technique known in the art, for example by extrusion or powder coating. Preferably, the polyamide coating layer is an extruded polyamide coating layer, as can be identified by observing the polymer chain orientation in the polyamide coating layer.

Preferably, the polyamide coating layer has been dyed by means other than by pigments. With pigment is meant here an insoluble finely divided substance that is incorporated in the mass of the polyamide coating layer to provide a colour to it when applying the polyamide coating layer. Basic dyes, acid dyes or disperse dyes can e.g. be used to dye the polyamide coating layer of the inventive wire, preferably after making hooks and eyes and after attaching them to the chest bands of brassieres.

In a preferred embodiment of the invention, the wire comprises a zinc or zinc alloy coating layer contacting the steel core wire. In a further preferred embodiment, the layer of polyamide-imide contacts the zinc or zinc alloy coating layer. The zinc or zinc alloy coating can be applied by any technique known in the art, for example by dipping, electrolysis or cladding. Examples of zinc-alloy coatings comprise Zn-Fe, Zn-Ni and Zn-Al alloys. A preferred zinc alloy coating is a Zn-AI alloy comprising between 2 and 15 % by weight aluminium. A further preferred zinc alloy coating comprises between 0.1 and 0.4 % by weight of a rare earth element such as Ce and/or La in order to improve properties like fluidity and wettability of the melt in coating.

A preferred thickness for a zinc or zinc alloy coating is between 1 and 100 µm; and more preferably between 1 and 50 µm or between 2 and 20 µm.

In examples of preferred embodiments, the core steel wire is a high carbon steel wire. With high carbon steel is meant a steel grade having carbon content between 0.30 and 1.70% by weight.

In a specific embodiment of the invention, the core steel wire is out of a low carbon steel grade. A low carbon steel composition is a steel composition comprising a carbon content less than 0.20 % by weight, more preferably less than 0.08 % by weight.

In preferred low carbon steel grades, possibly with exception for silicon and manganese - all the elements have a content of less than 0.50 % by weight, e.g. less than 0.20 % by weight, e.g. less than 0.10 % by weight. E.g. silicon is present in amounts of maximum 1.0 % by weight, e.g. maximum 0.50 % by weight, e.g. 0.30 % by weight or 0.15 % by weight. E.g. manganese is present in amount of maximum 2.0 % by weight, e.g. maximum 1.0 % by weight, e.g. 0.50 % weight or 0.30 % by weight. Preferably for the invention, a low carbon steel grade having mainly a ferrite or pearlite matrix is provided. Preferably, there are no martensite phases, no bainite phases and no cementite phases in the ferrite or pearlite matrix.

The core steel wire may have any type of cross-section, for example a round, a square, a rectangular, an oval or a semi-oval cross-section. However, round cross sections are preferred.

The core steel wire preferably has a diameter or an equivalent diameter ranging between 0.1 mm and 2.5 mm, more preferably between 0.5 mm and 1.5 mm, for example 0.7 mm or 1 mm. The "equivalent diameter" of a wire is defined as the diameter of an imaginary wire having a circular radial cross-section, which cross-section has a surface identical to the surface area of the particular wire.

A second aspect of the invention is a hook for use in a hook and eye closure. The hook is made from a wire as in any embodiment of the first aspect of the invention.

A third aspect of the invention is a fabric panel onto which one or more than one hook is attached as in the second aspect of the invention. The hook can e.g. be sewn onto the fabric panel. The fabric panel is e.g. a chest band of a brassiere.

A fourth aspect of the invention is an eye for use in a hook and eye closure. The eye is made from a wire as in any embodiment of the first aspect of the invention.

A fifth aspect of the invention is a fabric panel onto which one or more than one eye as in the fourth aspect of the invention is attached. The eye can e.g. be sewn onto the fabric panel. The fabric panel is e.g. a chest band of a brassiere.

A sixth aspect of the invention is a brassiere comprising one or more than one hook as in the second aspect of the invention; and/or comprising one or more than one eye as in the fourth aspect of the invention. The one or more than one hook and/or the one or more than one eye are provided for closure of the brassiere.

### Brief Description of Figures in the Drawings

Figure 1a shows the generalized structure of the polyamide-amic.
Figure 1b shows the generalized structure of the polyamide-amic acid in its imidized form, this is when the amic acid has been converted into an imide.
Figure 2 is a schematic illustration of a wire according to the invention.
Figure 3 shows a brassiere according the sixth aspect of the invention.

### Mode(s) for Carrying Out the Invention

Figure 1a shows the generalized structure of the polyamide-amic. Figure 1b shows the generalized structure of the polyamide-amic acid in its imidized form, this is when the amic acid has been converted into an imide.

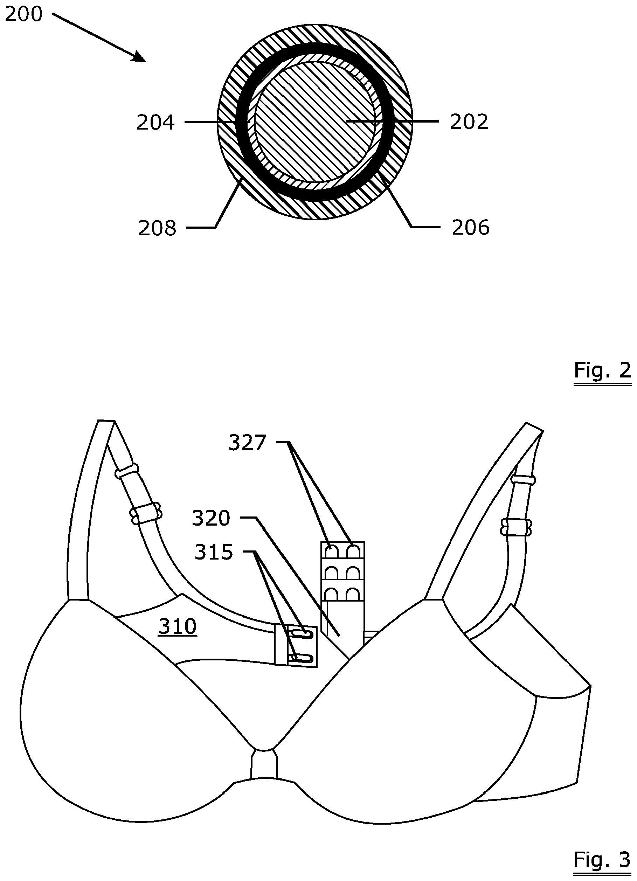

Figure 2 shows an example of a wire 200 according to the first aspect of the invention. The exemplary wire 200 comprises a steel core wire 202 (e.g. a low carbon steel wire, e.g. out of a steel alloy comprising less than 0.08% by weight of carbon) and a polyamide coating layer 208 provided at the surface of the wire 200. The polyamide of the polyamide coating layer 208 is e.g. polyamide 6. The wire comprises a polyamide-imide coating layer 206 contacting the polyamide coating layer 208. Although not essential for the invention, the exemplary wire 200 comprises a zinc or zinc alloy coating layer 204 contacting the steel core wire 202 and the polyamide-imide coating layer 206. The zinc or zinc alloy coating layer 204 e.g. has a thickness of 2 µm.

The steel core wire 202 has for example a round cross-section having a diameter of 0.7 mm or 1 mm, although other cross sectional shapes and diameters or equivalent diameters are possible. The polyamide-imide coating layer 206 has e.g. a thickness between 1 µm and 10 µm, for example 3 µm.

The polyamide coating layer 208 is for example a polyamide 6 coating layer having a thickness of 200 µm. The polyamide 6 layer can for example be applied by extrusion.

Figure 3 shows a brassiere according to the sixth aspect of the invention. The brassiere comprises fabric panels (the so-called chest bands) 310 and 320. The chest bands 310 and 320 are sewn into the brassiere. The first chest band 310 comprises hooks 315 according to the second aspect of the invention. The second chest band 320 comprises eyes 327 according to the fifth aspect of the invention. The hooks 315 are provided for closure of the brassiere via engagement with the eyes 327.

Simulation testing has been performed on the inventive wire example of figure 2 wherein the polyamide coating layer was polyamide 6 (sample 1), comparing its performance in terms of colour uniformity for brassieres with a similar wire without the polyamide-imide coating layer (sample 2); and with a similar wire without the polyamide-imide coating layer but in which the zinc layer had been subjected to a chromating process before applying the extrusion coated polyamide 6 surface layer (sample 3). The results showed that the inventive wire (sample 1) performed much better than sample 2; and also better than sample 3.

## Claims

1. A wire comprising a steel core wire and a polyamide coating layer;
wherein the polyamide coating layer is provided at the surface of the wire;
wherein the polyamide of the polyamide coating layer is selected from the group consisting of polyamide 6, polyamide 6.6, polyamide 11 and polyamide 12;
**characterized in that** the wire comprises a polyamide-imide coating layer contacting the polyamide coating layer at the inner side of the polyamide coating layer.

2. A wire as in claim 1, wherein the polyamide-imide coating layer has a thickness between 1 and 10 µm.

3. A wire as in any of the preceding claims, wherein the thickness of the polyamide coating layer is between 100 and 500 µm.

4. A wire as in any of the preceding claims; wherein the wire comprises a zinc or zinc alloy coating layer contacting the steel core wire.

5. A hook for use in a hook and eye closure; wherein the hook is made from a wire as in any of the claims 1 to 4.

6. Fabric panel onto which one or more than one hook as in claim 5 is attached.

7. An eye for use in a hook and eye closure, wherein the eye is made from a wire as in any of the claims 1 to 4.

8. Fabric panel onto which one or more than one eye as in claim 7 is attached.

9. A brassiere comprising one or more than one hook as in claim 5; and/or comprising one or more than one eye as in claim 7, wherein the one or more than one hook and/or the one or more than one eye are provided for closure of the brassiere.

## Patentansprüche

1. Draht, umfassend einen Stahlkerndraht und eine Polyamidüberzugsschicht, wobei die Polyamidüberzugsschicht auf der Oberfläche des Drahts bereitgestellt wird, wobei das Polyamid der Polyamidüberzugsschicht aus der aus Polyamid 6, Polyamid 6.6, Polyamid 11 und Polyamid 12 bestehenden Gruppe ausgewählt ist,
**dadurch gekennzeichnet, dass** der Draht eine Polyamid-Imid-Überzugsschicht umfasst, die sich an der Innenseite der Polyamidüberzugsschicht im Kontakt mit der Polyamidüberzugsschicht befindet.

2. Draht nach Anspruch 1, wobei die Polyamid-Imid-Überzugsschicht eine Dicke zwischen 1 und 10 µm aufweist.

3. Draht nach einem der vorhergehenden Ansprüche, wobei die Dicke der Polyamidüberzugsschicht zwischen 100 und 500 µm liegt.

4. Draht nach einem der vorhergehenden Ansprüche, wobei der Draht eine Zink- oder Zinklegierungsüberzugsschicht umfasst, die sich im Kontakt mit dem Stahlkerndraht befindet.

5. Haken zur Verwendung in einem Haken- und Ösenverschluss, wobei der Haken aus einem Draht nach einem der Ansprüche 1 bis 4 besteht.

6. Stoffbahn, an der ein oder mehrere Haken nach Anspruch 5 befestigt sind.

7. Öse zur Verwendung in einem Haken- und Ösenverschluss, wobei die Öse aus einem Draht nach einem der Ansprüche 1 bis 4 besteht.

8. Stoffbahn, an der eine oder mehrere Ösen nach Anspruch 7 befestigt sind.

9. Büstenhalter, umfassend einen oder mehrere Haken nach Anspruch 5 und/oder umfassend eine oder mehrere Ösen nach Anspruch 7, wobei der eine bzw. die mehreren Haken und/oder die eine bzw. die mehreren Ösen zum Schließen des Büstenhalters bereitgestellt sind.

## Revendications

1. Fil comprenant un fil central en acier et une couche de revêtement en polyamide ;
la couche de revêtement en polyamide étant prévue à la surface du fil ;
le polyamide de la couche de revêtement en polyamide étant choisi dans le groupe constitué par le polyamide 6, le polyamide 6.6, le polyamide 11 et le polyamide 12 ;
**caractérisé en ce que** le fil comprend une couche de revêtement en polyamide-imide en contact avec la couche de revêtement en polyamide sur la face interne de la couche de revêtement en polyamide.

2. Fil selon la revendication 1, la couche de revêtement en polyamide-imide ayant une épaisseur comprise entre 1 et 10 µm.

3. Fil selon l'une quelconque des revendications précédentes, l'épaisseur de la couche de revêtement en polyamide étant comprise entre 100 et 500 µm.

4. Fil selon l'une quelconque des revendications précédentes ; le fil comprenant une couche de revêtement de zinc ou d'alliage de zinc en contact avec le fil central en acier.

5. Crochet destiné à être utilisé dans une fermeture à crochets et à œillets ; le crochet étant fabriqué à partir d'un fil métallique selon l'une quelconque des revendications 1 à 4.

6. Panneau de tissu sur lequel un ou plusieurs crochets selon la revendication 5 sont fixés.

7. Œillet destiné à être utilisé dans une fermeture à crochet et à œillet, l'œillet étant réalisé à partir d'un fil selon l'une quelconque des revendications 1 à 4.

8. Panneau de tissu sur lequel un ou plus d'un œillet selon la revendication 7 sont fixée.

9. Soutien-gorge comprenant un ou plus d'un crochet selon la revendication 5 ; et/ou comprenant un ou plus d'un œillet selon la revendication 7, le ou les crochets et/ou le ou les œillets étant prévus pour la fermeture du soutien-gorge.
